# EUROPEAN PATENT SPECIFICATION

(11) **EP 3 082 360 B1**
(45) Date of publication and mention of the grant of the patent: **27.02.2019**
(21) Application number: 13898918.1
(22) Date of filing: 13.12.2013
(51) Int. Cl.: H04W 36/00

(54) **CONTINUOUS SWITCHING METHOD AND DEVICE FOR VOICE SERVICE**
KONTINUIERLICHES SCHALTVERFAHREN UND VORRICHTUNG FÜR SPRACHDIENST
PROCÉDÉ ET DISPOSITIF DE COMMUTATION CONTINUE POUR SERVICE TÉLÉPHONIQUE

(43) Date of publication of application: 19.10.2016
(73) Proprietor: Huawei Technologies Co., Ltd., Longgang District Shenzhen, Guangdong 518129 (CN)
(72) Inventor: LIU, Hai, Shenzhen Guangdong 518129 (CN); WU, Xiaobo, Shenzhen Guangdong 518129 (CN); ZOU, Ye, Shenzhen Guangdong 518129 (CN); ZHU, Sihong, Shenzhen Guangdong 518129 (CN)
(74) Representative: Thun, Clemens
(86) International application number: PCT/CN2013/089402
(87) International publication number: WO 2015/085584

(56) References cited:
- WO-A1-2013/135316
- WO-A2-2013/171011
- CN-A- 102 448 036
- CN-A- 103 118 020
- US-A1- 2010 034 168
- US-A1- 2010 074 223
- QUALCOMM EUROPE: "Location Continuity for SRVCC support of Emergency Calls", 3GPP DRAFT; S2-091451 (LOCATION CONTINUITY FOR SRVCC FOR EMERGENCY CALLS), 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. Budapest, Hungary; 20090216 - 20090220, 12 February 2009 (2009-02-12), XP050629503, [retrieved on 2009-02-12]

## Description

### TECHNICAL FIELD

Embodiments of the present invention relate to data communications technologies, and in particular, to a continuity handover method and device for a voice service.

### BACKGROUND

For example, WO 2013/135316A1 refers to a handover of user equipment undetected emergency calls. Further, US 2010/0074223A1 refers to CS to IMS hand-back and hand-in for IMS systems for legacy CS UE with home node B access.

At present, the 3rd Generation Partnership Project (3GPP) Standardization Organization proposes a new-generation evolved network system. A core network part of the evolved network system is a System Architecture Evolution (System Architecture Evolution, SAE for short) network, and an access network part of the evolved network system is a Long Term Evolution (Long Term Evolution, LTE for short) network. LTE is also referred to as Evolved Universal Terrestrial Radio Access Network (Evolved Universal Terrestrial Radio Access Network, E-UTRAN for short). In second generation (2G) and third generation (3G) networks, a voice service is generally carried in a circuit switched (Circuit Switch, CS for short) domain, and a data service is generally carried in a packet switched (Packet Switch, PS for short) domain. The SAE and LTE networks serve as a packet switched system over a PS domain, in which a voice service can be transmitted only on a PS domain bearer thereof, and an IMS controls the voice service by using an IP bearer-based network.

To ensure that a high-quality CS-domain service can be carried out in an LTE network smoothly, two solutions are mainly used in the prior art: circuit switched fall back (CS fall back, CSFB for short) and single radio voice call continuity (Single Radio Voice Call Continuity, SRVCC for short). By means of the CSFB solution, a user equipment (User Equipment, UE for short) can process a CS-domain service in an LTE network without affecting a currently on-going PS service. Specifically, when UE attaches to a PS domain, the UE may attach to a CS domain by means of combined attach. After the combined attach succeeds, UE that enables a CSFB function can fall back to the CS domain when a CS-domain service is initiated or received; after falling back to the CS domain, the UE performs a common CS-domain voice call setup procedure. In the SRVCC solution, mainly, an Sv interface is introduced between an MME and a mobile switching center (mobile switching center, MSC for short), and an LTE VoIP service can be handed over to a CS domain by means of the Sv interface.

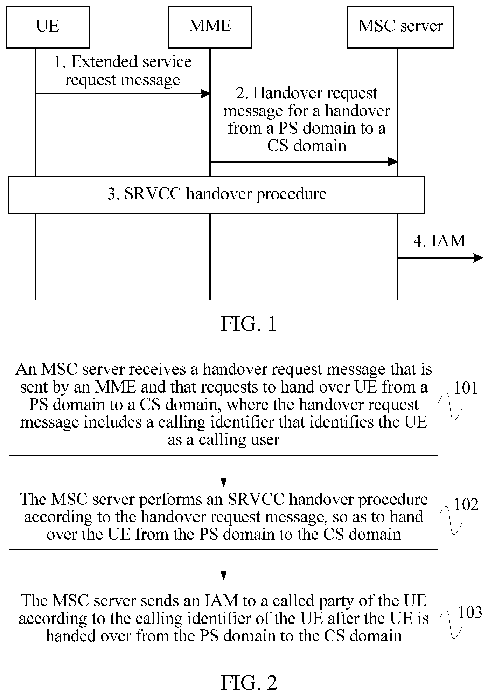

When the CSFB solution is used, it takes a relatively long time for UE to fall back to a CS domain from a PS domain; therefore, in the prior art, a CSFB technology is combined with SRVCC, and a CSFB procedure needs to implement a handover based on an SRVCC procedure, so that a terminal can be rapidly handed over from a PS domain to a CS domain. By using an example in which UE serves as a calling party for description, as shown in FIG. 1, FIG. 1 is a signaling flowchart of a calling-party handover implemented by means of CSFB based on an SRVCC procedure in the prior art. When the UE initiates a voice call service, the UE first sends an extended service request message to an MME, where the extended service request message includes a CSFB instruction. After receiving the CSFB instruction, the MME sends, to an MSC server, a PS-domain-to-CS-domain handover request message. The MSC server implements, according to an SRVCC handover procedure, a handover of a terminal from a PS domain to a CS domain. However, during implementation of the MSC server, generally, a CSFB module and an SRVCC module are implemented separately and do not exchange information with each other. The SRVCC handover procedure is the same regardless of whether the UE serves as a calling party or a called party. Therefore, after the handover is completed, the SRVCC module on the MSC server does not know whether the currently served UE serves as a calling party to which an initial address message (Initial Address Message, IAM for short) needs to be sent, or serves as a called party to which a SETUP message needs to be sent.

### SUMMARY

The invention is set out in the appended set of claims. The embodiments and/or examples of the following description which are not covered by the appended claims are considered as not being part of the present invention.

Embodiments of the present invention provide a continuity handover method and device for a voice service, which can enable an MSC server to determine, after completing an SRVCC handover procedure, whether UE currently served by the MSC server is a calling user or a called user.

A first aspect of the present invention provides a mobility management entity MME, including:
a receiving module, configured to receive an extended service request message sent by user equipment UE;
a determining module, configured to determine that the UE is a calling user; and
a sending module, configured to: after the determining module determines that the UE is a calling user, send, to a mobile switching center MSC server, a handover request message that requests to hand over the UE from a packet switched PS domain to a circuit switched CS domain, where the handover request message includes a calling identifier that identifies the UE as a calling user, wherein the determining module is specifically configured to:
determine whether a paging message sent by the MSC server for the UE is received; and
if not, determine that the UE is a calling user.

In a first possible implementation manner of the first aspect of the present invention, the calling identifier is included in a session transfer number for SRVCC STN-SR in the handover request message.

An second aspect of the present invention provides a mobility management entity MME, including:
a receiving module, configured to receive an extended service request message sent by user equipment UE;
a determining module, configured to determine that the UE is a called user; and
   a sending module, configured to: after the determining module determines that the UE is a called user, send, to a mobile switching center MSC server, a handover request message that requests to hand over the UE from a packet switched PS domain to a circuit switched CS domain, where the handover request message includes a called identifier that identifies the UE as a called user, wherein the receiving module is further configured to: before receiving the extended service request message sent by the UE, receive a first paging message sent by a MSC server for the UE; and
   the sending module is further configured to: send a second paging message to the UE according to the first paging message received by the receiving module,
   wherein the determining module is specifically configured to:
   determine whether the first paging message sent by the MSC server for the UE is received; and
in situation that the first paging message sent by the MSC server for the UE is received, determine that the UE is a called user.

In a first possible implementation manner of the second aspect of the present invention, the called identifier is included in a session transfer number for SRVCC STN-SR in the handover request message.

In the continuity handover method and device for a voice server provided in the embodiments of the present invention, an MME adds a calling identifier or a called identifier to a handover request message that is to be sent to an MSC server to request a handover from a PS domain to a CS domain, so that the MSC server determines that UE is a calling user or a called user according to the calling identifier or the called identifier after the UE is handed over from the PS domain to the CS domain; when the UE is a calling user, the MSC server sends an IAM to the UE; when the UE is a called user, the MSC server sends a SETUP message to the UE.

### BRIEF DESCRIPTION OF DRAWINGS

To describe the technical solutions in the embodiments of the present invention or in the prior art more clearly, the following briefly describes the accompanying drawings required for describing the embodiments or the prior art. Apparently, the accompanying drawings in the following description show some embodiments of the present invention, and persons of ordinary skill in the art may still derive other drawings from these accompanying drawings without creative efforts.
FIG. 1 is a signaling flowchart of a calling-party handover implemented by means of CSFB based on an SRVCC procedure in the prior art;
FIG. 2 is a flowchart of Embodiment 1 of a continuity handover method for a voice service according to the present invention;
FIG. 3 is a schematic diagram of an SRVCC architecture;
FIG. 4 is a flowchart of Embodiment 2 of a continuity handover method for a voice service according to the present invention;
FIG. 5 is a flowchart of Embodiment 3 of a continuity handover method for a voice service according to the present invention;
FIG. 6 is a flowchart of Embodiment 4 of a continuity handover method for a voice service according to the present invention;
FIG. 7 is a signaling flowchart of Embodiment 5 of a continuity handover method for a voice service according to the present invention;
FIG. 8 is a signaling flowchart of Embodiment 6 of a continuity handover method for a voice service according to the present invention;
FIG. 9 is a schematic structural diagram of an MSC server according to an embodiment of the present invention;
FIG. 10 is a schematic structural diagram of an MME according to an embodiment of the present invention;
FIG. 11 is a schematic structural diagram of another MSC server according to an embodiment of the present invention;
FIG. 12 is a schematic structural diagram of another MME according to an embodiment of the present invention;
FIG. 13 is a schematic structural diagram of still another MSC server according to an embodiment of the present invention;
FIG. 14 is a schematic structural diagram of still another MME according to an embodiment of the present invention;
FIG. 15 is a schematic structural diagram of yet another MSC server according to an embodiment of the present invention; and
FIG. 16 is a schematic structural diagram of yet another MME according to an embodiment of the present invention.

### DESCRIPTION OF EMBODIMENTS

To make the objectives, technical solutions, and advantages of the embodiments of the present invention clearer, the following clearly and completely describes the technical solutions in the embodiments of the present invention with reference to the accompanying drawings in the embodiments of the present invention. Apparently, the described embodiments are some but not all of the embodiments of the present invention. All other embodiments obtained by persons of ordinary skill in the art based on the embodiments of the present invention without creative efforts shall fall within the protection scope of the present invention.

FIG. 2 is a flowchart of Embodiment 1 of a continuity handover method for a voice service according to the present invention. In this embodiment, UE serves as a calling user. As shown in FIG. 2, the method provided in this embodiment includes the following steps:
Step 101: An MSC server receives a handover request message that is sent by an MME and that requests to hand over UE from a PS domain to a CS domain, where the handover request message includes a calling identifier that identifies the UE as a calling user.

The UE initiates a CSFB procedure as a calling party. First, the UE sends an extended service request message (extended service request) to the MME, where the extended service request message includes a CSFB instruction. After receiving the extended service request sent by the UE, the MME determines that the UE is a calling user. Then, the MME adds a calling identifier that identifies the UE as a calling user to a handover request message and sends the handover request message to the mobile switching center (mobile switching center, MSC server for short). The handover request message is used to request to hand over the UE from a PS domain to a CS domain. The MME and the MSC server communicate with each other by using an Sv interface. Specifically, the calling identifier may be included in a session transfer number for SRVCC (Session Transfer Number for SRVCC, STN-SR for short) in the handover request message, and may be carried in a 4-bit idle field in the STN-SR.

Step 102: The MSC server performs an SRVCC handover procedure according to the handover request message, so as to hand over the UE from the PS domain to the CS domain.

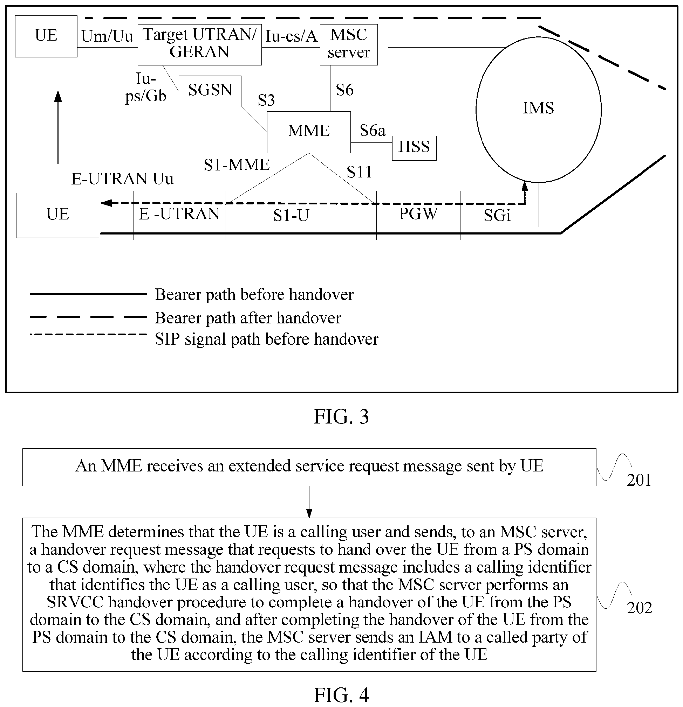

After receiving the handover request message, the MSC server performs an SRVCC handover procedure to complete a handover of the UE from the PS domain to the CS domain. The SRVCC handover procedure belongs to the prior art, and is not described in detail herein. FIG. 3 is a schematic diagram of an SRVCC architecture. As shown in FIG. 3, the SRVCC architecture mainly includes the following functional entities: an MSC server, a home subscriber server (Home Subscriber Server, HSS for short), an MME, an IP multimedia subsystem (IP Multimedia Subsystem, IMS for short), a serving GPRS gateway support node (Serving GPRS Support Node, SGSN for short), and a packet data network gateway (Packet Data Network Gateway, PGW for short). The MSC server processes a voice service handover request (that is, a request for a handover from a PS domain to a CS domain) that is sent by the MME by using the Sv interface, to initiate a session transfer procedure from the PS domain to the CS domain. In the SRVCC solution, in addition to conventional functions, the HSS further needs to store a special parameter: session transfer number (Session Transfer Number for SRVCC, STN-SR for short). In an attach process of the UE, the HSS may transfer the STN-SR parameter to the MME by using an insert subscriber data message, and the MME forwards the STN-SR parameter to the MSC server. The MME mainly initiates an SRVCC handover to a target cell. Several interfaces are briefly described below. An Sv interface is an interface between an MME and an MSC server and is responsible for an SRVCC handover between an E-TURAN and a GERAN/UTRAN, where the GSM EDGE Radio Access Network (GSM EDGE Radio Access Network, GERAN for short), GERAN, is a conventional 2G network, the universal terrestrial radio access network UTRAN (Universal Terrestrial Radio Access Network, UTRAN for short), UTRAN, is a conventional 3G network, a handover from a PS domain to a CS domain is a handover from the E-TURAN to the GERAN or UTRAN, and the E-UTRAN is also referred to as an LTE network. An S6a interface is an interface between an HSS and an MME, and in an attach process in an E-UTRAN network, the MME may download information related to SRVCC from the HSS by using the S6a interface. An S1-MME interface is responsible for signaling transmission between an MME and an E-UTRAN.

Step 103: The MSC server sends an IAM to a called party of the UE according to the calling identifier of the UE after the UE is handed over from the PS domain to the CS domain.

After the MSC server completes the SRVCC handover procedure, the UE is handed over from the PS domain to the CS domain and can perform normal CS-domain service processing, that is, the UE can normally process a voice service. Because the UE is a calling user, the MSC server needs to send an IAM after the handover is completed. The IAM is the first message sent for setting up a call, and includes all information needed for setting up a call and determining a route in a next exchange.

In the method provided in this embodiment, an MSC server determines, after completing a handover from a PS domain to a CS domain, that currently served UE is a calling user according to a calling identifier of the UE carried in a handover request message, and the MSC server performs a calling setup procedure and sends an IAM to a called party of the UE.

FIG. 4 is a flowchart of Embodiment 2 of a continuity handover method for a voice service according to the present invention. In this embodiment, a description is provided by using UE as a calling user. As shown in FIG. 4, the method provided in this embodiment includes the following steps:
Step 201: An MME receives an extended service request message sent by UE.

The UE initiates a CSFB procedure as a calling party. First, the UE sends an extended service request message (extended service request) message to the MME, where the extended service request message includes a CSFB instruction.

Step 202: The MME determines that the UE is a calling user and sends, to an MSC server, a handover request message that requests to hand over the UE from a PS domain to a CS domain, where the handover request message includes a calling identifier that identifies the UE as a calling user, so that the MSC server performs an SRVCC handover procedure to complete a handover of the UE from the PS domain to the CS domain, and after completing the handover of the UE from the PS domain to the CS domain, the MSC server sends an IAM to a called party of the UE according to the calling identifier of the UE.

In this embodiment, after the MME receives the extended service request sent by the UE, the MME determines whether the UE is a calling user or a called user: The MME determines whether a paging message sent by the MSC server for the UE is received; if not, that is, if no paging message sent by the MSC server for the UE is received before the MME receives the extended service request, the MME determines that the UE is a calling user.

After determining that the UE is a calling user, the MME adds a calling identifier of the UE to a handover request message and sends the handover request message to the MSC server, where the handover request is used to request to hand over the UE from a PS domain to a CS domain. After receiving the handover request message, the MSC server performs an SRVCC handover procedure to complete a handover of the UE from the PS domain to the CS domain, and after completing the handover of the UE from the PS domain to the CS domain, the MSC server sends an IAM to a called party of the UE according to the calling identifier of the UE. Specifically, the calling identifier may be included in a session transfer number for SRVCC STN-SR in the handover request message, and may be carried in a 4-bit idle field in the STN-SR.

In the method provided in this embodiment, after receiving an extended service request message sent by UE, an MME first determines that the UE is a calling user, and then adds a calling identifier of the UE to a handover request message that is sent to an MSC server, so that after completing a handover of the UE from a PS domain to a CS domain, the MSC server determines that the UE is a calling user according to the calling identifier of the UE, so as to perform a calling setup procedure, and the MSC server sends an IAM to a called party of the UE.

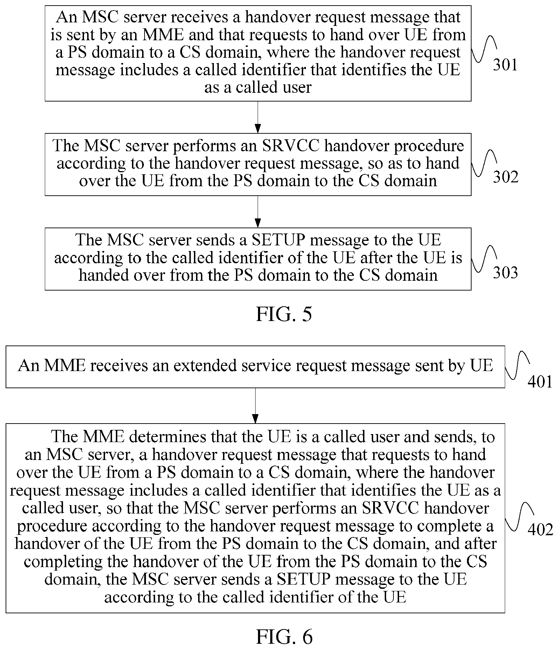

FIG. 5 is a flowchart of Embodiment 3 of a continuity handover method for a voice service according to the present invention. In this embodiment, a description is provided by using UE as a called user. As shown in FIG. 5, the method provided in this embodiment includes the following steps:
Step 301: An MSC server receives a handover request message that is sent by an MME and that requests to hand over UE from a PS domain to a CS domain, where the handover request message includes a called identifier that identifies the UE as a called user.

Before the UE initiates a CSFB procedure as a called party, the UE further receives a paging message (Paging) sent by the MME. After receiving the paging message, the UE sends an extended service request message (extern service request) message to the MME, where the extended service request message includes a CSFB instruction. After receiving the extended service request sent by the UE, the MME determines that the UE is a called user, then adds a called identifier that identifies the UE as a called user to a handover request message, and sends the handover request message to the MSC server, where the handover request message is used to request to hand over the UE from a PS domain to a CS domain. Specifically, the called identifier may be included in a session transfer number for SRVCC STN-SR in the handover request message, and may be carried in a 4-bit idle field in the STN-SR.

Step 302: The MSC server performs an SRVCC handover procedure according to the handover request message, so as to hand over the UE from the PS domain to the CS domain.

After receiving the handover request message, the MSC server performs an SRVCC handover procedure to complete a handover of the UE from the PS domain to the CS domain. The SRVCC handover procedure belongs to the prior art, and is not described in detail herein. It should be noted that the SRVCC handover procedure is the same when UE serves as a calling user or a called user. Step 303: The MSC server sends a SETUP message to the UE according to the called identifier of the UE after the UE is handed over from the PS domain to the CS domain.

After the MSC server completes the SRVCC handover procedure, the UE is handed over from the PS domain to the CS domain and can perform normal CS-domain service processing, that is, the UE can normally process a voice service. Because the UE is a called user, the MSC server needs to send a SETUP message after completing the handover, where the SETUP message includes information of a calling user.

FIG. 6 is a flowchart of Embodiment 4 of a continuity handover method for a voice service according to the present invention. In this embodiment, a description is provided by using UE as a called user. As shown in FIG. 6, the method provided in this embodiment includes the following steps:
Step 401: An MME receives an extended service request message sent by UE.

Before the UE initiates a CSFB procedure as a called party, the UE further receives a second paging message (Paging) sent by the MME, where the second paging message is sent to the UE after the MME receives a first paging message for the UE sent by an MSC server. After receiving an IAM message, the MSC server determines that a calling user needs to page the UE. Therefore, the MSC server sends the first paging message to the MME. After receiving the first paging message for paging the UE, the MME records the UE as a called user.

After receiving the second paging message sent by the MME, the UE sends an extended service request message (extern service request) message to the MME, where the extended service request message includes a CSFB instruction. After receiving the extended service request sent by the UE, the MME determines that the UE is a called user, then adds a called identifier that identifies the UE as a called user to a handover request message, and sends the handover request message to the MSC server, where the handover request message is used to request to hand over the UE from a PS domain to a CS domain.

Step 402: The MME determines that the UE is a called user and sends, to an MSC server, a handover request message that requests to hand over the UE from a PS domain to a CS domain, where the handover request message includes a called identifier that identifies the UE as a called user, so that the MSC server performs an SRVCC handover procedure according to the handover request message to complete a handover of the UE from the PS domain to the CS domain, and after completing the handover of the UE from the PS domain to the CS domain, the MSC server sends a SETUP message to the UE according to the called identifier of the UE.

In this embodiment, after the MME receives the extended service request sent by the UE, the MME determines whether the UE is a calling user or a called user. The MME determines whether the UE is a calling user or a called user by determining whether a first paging message for paging the UE sent by the MSC server is received. If the MME receives the first paging message for paging the UE sent by the MSC server, the MME determines that the UE is a called user.

After determining that the UE is a called user, the MME adds a called identifier of the UE to a handover request message and sends the handover request message to the MSC server, where the switch request is used to request to hand over the UE from the PS domain to the CS domain. After receiving the handover request message, the MSC server performs an SRVCC handover procedure to complete a handover of the UE from the PS domain to the CS domain, and after completing the handover of the UE from the PS domain to the CS domain, the MSC server sends a SETUP message to the UE according to the called identifier of the UE. Specifically, the called identifier may be included in a session transfer number for SRVCC STN-SR in the handover request message, and may be carried in a 4-bit idle field in the STN-SR.

In the method provided in this embodiment, after receiving an extended service request message sent by UE, an MME first determines that the UE is a called user, and then adds a called identifier of the UE to a handover request message that is sent to an MSC server, so that after completing a handover of the UE from a PS domain to a CS domain, the MSC server determines that the UE is a called user according to the called identifier of the UE, so as to perform a called setup procedure, and the MSC server sends a SETUP message to the UE.

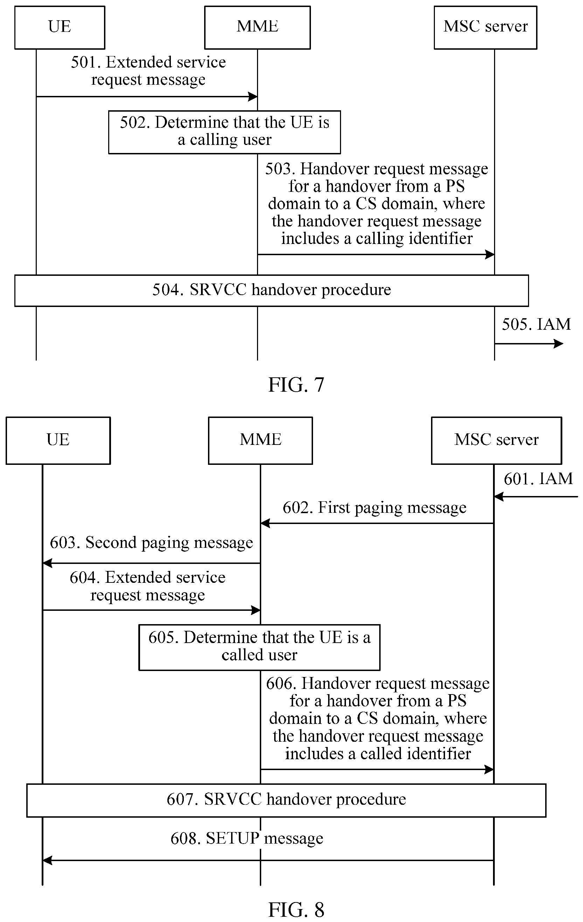

FIG. 7 is a signaling flowchart of Embodiment 5 of a continuity handover method for a voice service according to the present invention. In this embodiment, a description is provided by using UE as a calling party. As shown in FIG. 7, the method provided in this embodiment includes the following steps:
Step 501: UE sends an extended service request message to an MME.
Step 502: The MME determines that the UE is a calling user.
Step 503: The MME sends, to an MSC server, a handover request message that requests a handover from a PS domain to a CS domain, where the handover request message includes a calling identifier. Step 504: The MSC server performs an SRVCC handover procedure, so as to hand over the UE from the PS domain to the CS domain.
Step 505: The MSC server sends an IAM to a called party of the UE according to the calling identifier. For a specific implementation manner, refer to the description in Embodiment 1 and Embodiment 2, and details are not described herein again.

FIG. 8 is a signaling flowchart of Embodiment 6 of a continuity handover method for a voice service according to the present invention. In this embodiment, a description is provided by using UE as a called party. As shown in FIG. 8, the method provided in this embodiment includes the following steps:
Step 601: The MSC server receives an IAM.
Step 602: The MSC server sends a first paging message to an MME according to the IAM message.
Step 603: The MME sends a second paging message to UE according to the first paging message.
Step 604: The UE sends an extended service request message to the MME.
Step 605: The MME determines that the UE is a called user.
Step 606: The MME sends, to the MSC server, a handover request message that requests a handover from a PS domain to a CS domain, where the handover request message includes a called identifier.
Step 607: The MSC server performs an SRVCC handover procedure, so as to hand over the UE from the PS domain to the CS domain.
Step 608: The MSC server sends a SETUP message to the UE according to the called procedure. For a specific implementation manner, refer to the description in Embodiment 3 and Embodiment 4, and details are not described herein again.

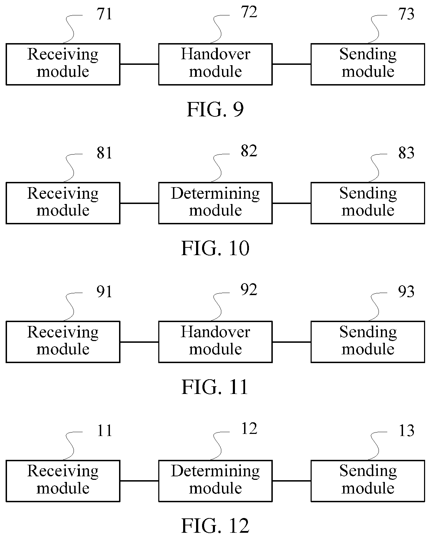

FIG. 9 is a schematic structural diagram of an MSC server according to an embodiment of the present invention. As shown in FIG. 9, the MSC server provided in this embodiment includes: a receiving module 71, a handover module 72, and a sending module 73.

The receiving module 71 is configured to receive a handover request message that is sent by a mobility management entity MME and that requests to hand over user equipment UE from a packet switched PS domain to a circuit switched CS domain, where the handover request message includes a calling identifier that identifies the UE as a calling user.

The handover module 72 is configured to perform a single radio voice call continuity SRVCC handover procedure according to the handover request message received by the receiving module 71, so as to hand over the UE from the PS domain to the CS domain.

The sending module 73 is configured to send an initial address message IAM to a called party of the UE according to the calling identifier of the UE after the UE is handed over from the PS domain to the CS domain.

In this embodiment, the calling identifier may be included in a session transfer number for SRVCC STN-SR in the handover request message.

The MSC server provided in this embodiment may be configured to perform the technical solution provided in Method Embodiment 1, and has a similar implementation manner and technical effect; details are not described herein again.

FIG. 10 is a schematic structural diagram of an MME according to an embodiment of the present invention. As shown in FIG. 10, the MME provided in this embodiment includes: a receiving module 81, a determining module 82, and a sending module 83.

The receiving module 81 is configured to receive an extended service request message sent by user equipment UE.

The determining module 82 is configured to determine that the UE is a calling user.

The sending module 83 is configured to: after the determining module 82 determines that the UE is a calling user, send, to a mobile switching center MSC server, a handover request message that requests to hand over the UE from a packet switched PS domain to a circuit switched CS domain, where the handover request message includes a calling identifier that identifies the UE as a calling user, so that the MSC server performs a single radio voice call continuity SRVCC handover procedure according to the handover request message to complete a handover of the UE from the PS domain to the CS domain, and after completing the handover of the UE from the PS domain to the CS domain, the MSC server sends an initial address message IAM to a called party of the UE according to the calling identifier of the UE.

In this embodiment, the determining module 82 is specifically configured to: determine whether a paging message sent by the MSC server for the UE is received, and if not, determine that the UE is a calling user.

In this embodiment, the calling identifier may be included in a session transfer number for SRVCC STN-SR in the handover request message.

The MME provided in this embodiment may be configured to perform the technical solution provided in Method Embodiment 2, and has a similar implementation manner and technical effect; details are not described herein again.

FIG. 11 is a schematic structural diagram of another MSC server according to an embodiment of the present invention. As shown in FIG. 11, the MSC server provided in this embodiment includes: a receiving module 91, a handover module 92, and a sending module 93.

The receiving module 91 is configured to receive a handover request message that is sent by a mobility management entity MME and that requests to hand over user equipment UE from a packet switched PS domain to a circuit switched CS domain, where the handover request message includes a called identifier that identifies the UE as a called user.

The handover module 92 is configured to perform a single radio voice call continuity SRVCC handover procedure according to the handover request message received by the receiving module 91, so as to hand over the UE from the PS domain to the CS domain.

The sending module 93 is configured to send a SETUP message to the UE according to the called identifier of the UE after the UE is handed over from the PS domain to the CS domain.

In this embodiment, the called identifier may be included in a session transfer number for SRVCC STN-SR in the handover request message.

The MSC server provided in this embodiment may be configured to perform the technical solution provided in Method Embodiment 3, and has a similar implementation manner and technical effect; details are not described herein again.

FIG. 12 is a schematic structural diagram of another MME according to an embodiment of the present invention. As shown in FIG. 12, the MME provided in this embodiment includes: a receiving module 11, a determining module 12, and a sending module 13.

The receiving module 11 is configured to receive an extended service request message sent by user equipment UE.

The determining module 12 is configured to determine that the UE is a called user.

The sending module 13 is configured to: after the determining module 12 determines that the UE is a called user, send, to a mobile switching center MSC server, a handover request message that requests to hand over the UE from a packet switched PS domain to a circuit switched CS domain, where the handover request message includes a called identifier that identifies the UE as a called user, so that the MSC server performs a single radio voice call continuity SRVCC handover procedure according to the handover request message to complete a handover of the UE from the PS domain to the CS domain, and after completing the handover of the UE from the PS domain to the CS domain, the MSC server sends a SETUP message to the UE according to the called identifier of the UE.

In this embodiment, the receiving module 11 is further configured to: before receiving the extended service request message sent by the UE, receive a first paging message sent by the MSC server for the UE; the sending module 13 is further configured to: send a second paging message to the UE according to the first paging message received by the receiving module 11, so that the UE sends the extended service request message to the MME according to the second paging message.

In this embodiment, the determining module 12 determines whether the first paging message sent by the MSC server for the UE is received, and if yes, determines that the UE is a called user.

In this embodiment, the called identifier may be included in a session transfer number for SRVCC STN-SR in the handover request message.

The MME provided in this embodiment may be configured to perform the technical solution provided in Method Embodiment 4, and has a similar implementation manner and technical effect; details are not described herein again.

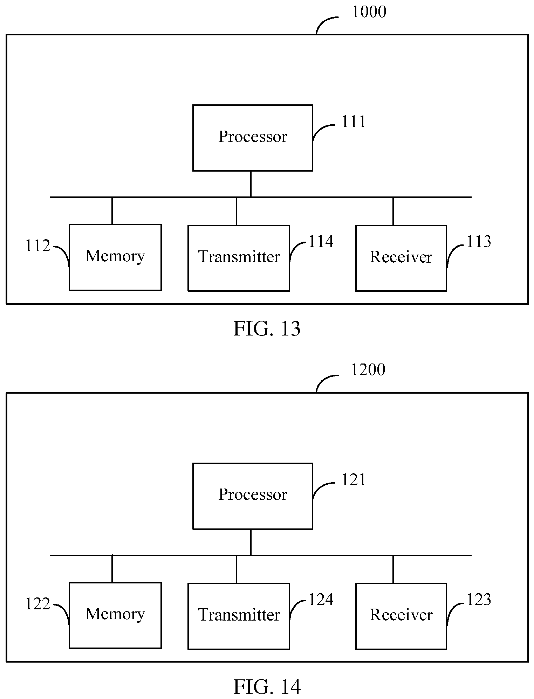

FIG. 13 is a schematic structural diagram of still another MSC server according to an embodiment of the present invention. As shown in FIG. 13, an MSC server 1000 provided in this embodiment includes: a processor 111, a memory 112, a receiver 113, and a transmitter 114. The memory 111, the receiver 113, and the transmitter 114 may be connected to the processor 111 by using a bus. The memory 111 stores execution instructions. When the MSC server 1000 is running, the processor 111 and the memory 112 communicate with each other, and the processor 111 executes the instructions, so that the MSC server 1000 performs the continuity handover method for a voice service provided in the present invention.

The receiver 113 is configured to receive a handover request message that is sent by a mobility management entity MME and that requests to hand over user equipment UE from a packet switched PS domain to a circuit switched CS domain, where the handover request message includes a calling identifier that identifies the UE as a calling user.

The processor 111 is configured to perform a single radio voice call continuity SRVCC handover procedure according to the handover request message received by the receiver 113, so as to hand over the UE from the PS domain to the CS domain.

The transmitter 114 is configured to send an initial address message IAM to a called party of the UE according to the calling identifier of the UE after the UE is handed over from the PS domain to the CS domain.

The calling identifier may be included in a session transfer number for SRVCC STN-SR in the handover request message.

The MSC server provided in this embodiment may be configured to perform the technical solution provided in Method Embodiment 1, and has a similar implementation manner and technical effect; details are not described herein again.

FIG. 14 is a schematic structural diagram of still another MME according to an embodiment of the present invention. As shown in FIG. 14, an MME 1200 provided in this embodiment includes: a processor 121, a memory 122, a receiver 123, and a transmitter 124. The memory 122, the receiver 123, and the transmitter 124 may be connected to the processor 121 by using a bus. The memory 122 stores execution instructions. When the MME 1200 is running, the processor 121 and the memory 122 communicate with each other, and the processor 121 executes the instructions, so that the MME 1200 performs the continuity handover method for a voice service provided in the present invention. The receiver 123 is configured to receive an extended service request message sent by user equipment UE.

The processor 121 is configured to determine that the UE is a calling user.

The transmitter 124 is configured to: after the processor 121 determines that the UE is a calling user, send, to a mobile switching center MSC server, a handover request message that requests to hand over the UE from a packet switched PS domain to a circuit switched CS domain, where the handover request message includes a calling identifier that identifies the UE as a calling user, so that the MSC server performs a single radio voice call continuity SRVCC handover procedure according to the handover request message to complete a handover of the UE from the PS domain to the CS domain, and after completing the handover of the UE from the PS domain to the CS domain, the MSC server sends an initial address message IAM to a called party of the UE according to the calling identifier of the UE.

The processor 121 is specifically configured to: determine whether a paging message sent by the MSC server for the UE is received, and if not, determine that the UE is a calling user.

In this embodiment, the calling identifier may be included in a session transfer number for SRVCC STN-SR in the handover request message.

The MME provided in this embodiment may be configured to perform the technical solution provided in Method Embodiment 2, and has a similar implementation manner and technical effect; details are not described herein again.

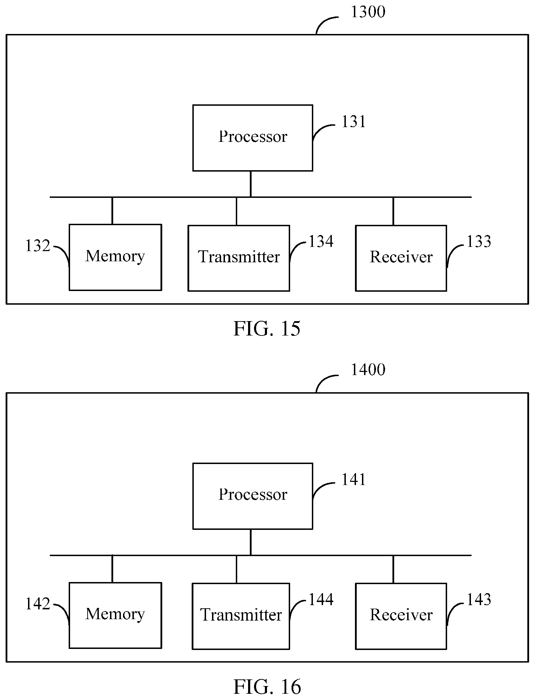

FIG. 15 is a schematic structural diagram of yet another MSC server according to an embodiment of the present invention. As shown in FIG. 15, an MSC server 1300 provided in this embodiment includes: a processor 131, a memory 132, a receiver 133, and a transmitter 134. The memory 132, the receiver 133, and the transmitter 134 may be connected to the processor 131 by using a bus. The memory 132 stores execution instructions. When the MSC server 1300 is running, the processor 131 and the memory 132 communicate with each other, and the processor 131 executes the instructions, so that the MSC server 1300 performs the continuity handover method for a voice service provided in the present invention.

The receiver 133 is configured to receive a handover request message that is sent by a mobility management entity MME and that requests to hand over user equipment UE from a packet switched PS domain to a circuit switched CS domain, where the handover request message includes a called identifier that identifies the UE as a called user.

The processor 131 is configured to perform a single radio voice call continuity SRVCC handover procedure according to the handover request message received by the receiver 133, so as to hand over the UE from the PS domain to the CS domain.

The transmitter 134 is configured to send a SETUP message to the UE according to the called identifier of the UE after the UE is handed over from the PS domain to the CS domain.

In this embodiment, the called identifier may be included in a session transfer number for SRVCC STN-SR in the handover request message.

The MSC server provided in this embodiment may be configured to perform the technical solution provided in Method Embodiment 3, and has a similar implementation manner and technical effect; details are not described herein again.

FIG. 16 is a schematic structural diagram of yet another MME according to an embodiment of the present invention. As shown in FIG. 16, an MME 1400 provided in this embodiment includes: a processor 141, a memory 142, a receiver 143, and a transmitter 144. The memory 142, the receiver 143, and the transmitter 144 may be connected to the processor 141 by using a bus. The memory 142 stores execution instructions. When the MME 1400 is running, the processor 141 and the memory 142 communicate with each other, and the processor 141 executes the instructions, so that the MME 1400 performs the continuity handover method for a voice service provided in the present invention. The receiver 143 is configured to receive an extended service request message sent by user equipment UE.

The processor 141 is configured to determine that the UE is a called user.

The transmitter 144 is configured to: after the processor 141 determines that the UE is a called user, send, to a mobile switching center MSC server, a handover request message that requests to hand over the UE from a packet switched PS domain to a circuit switched CS domain, where the handover request message includes a called identifier that identifies the UE as a called user, so that the MSC server performs a single radio voice call continuity SRVCC handover procedure according to the handover request message to complete a handover of the UE from the PS domain to the CS domain, and after completing the handover of the UE from the PS domain to the CS domain, the MSC server sends a SETUP message to the UE according to the called identifier of the UE.

In this embodiment, the receiver 143 is further configured to: before receiving the extended service request message sent by the UE, receive a first paging message sent by the MSC server for the UE; the transmitter 144 is further configured to: send a second paging message to the UE according to the first paging message received by the receiver 143, so that the UE sends the extended service request message to the MME according to the second paging message.

In this embodiment, the processor 141 is specifically configured to: determine whether the first paging message sent by the MSC server for the UE is received, and if yes, determine that the UE is a called user.

In this embodiment, the called identifier may be included in a session transfer number for SRVCC STN-SR in the handover request message.

The MME provided in this embodiment may be configured to perform the technical solution provided in Method Embodiment 4, and has a similar implementation manner and technical effect; details are not described herein again.

Persons of ordinary skill in the art may understand that all or some of the steps of the method embodiments may be implemented by a program instructing relevant hardware. he program may be stored in a computer-readable storage medium. When the program runs, the steps of the method embodiments are performed. The foregoing storage medium includes: any medium that can store program code, such as a ROM, a RAM, a magnetic disk, or an optical disc.

## Claims

1. A mobility management entity, MME, comprising:
a receiving module (81), configured to receive an extended service request message sent by user equipment, UE;
a determining module (82), configured to determine that the UE is a calling user; and
a sending module (83), configured to: after the determining module(82) determines that the UE is a calling user, send, to a mobile switching center, MSC, server, a handover request message that requests to hand over the UE from a packet switched, PS, domain to a circuit switched, CS, domain, wherein the handover request message comprises a calling identifier that identifies the UE as a calling user, wherein the determining module is specifically configured to:
determine whether a paging message sent by a MSC server for the UE is received; and
in situation that no paging message for the UE sent by the MSC server is received, determine that the UE is a calling user.

2. The MME according to claim 1, wherein the calling identifier is comprised in a session transfer number for SRVCC STN-SR in the handover request message.

3. A mobility management entity, MME,, comprising:
a receiving module (11), configured to receive an extended service request message sent by user equipment, UE;
a determining module (12), configured to determine that the UE is a called user; and
a sending module (13), configured to: after the determining module (12) determines that the UE is a called user, send, to a mobile switching center MSC server, a handover request message that requests to hand over the UE from a packet switched, PS, domain to a circuit switched, CS, domain, wherein the handover request message comprises a called identifier that identifies the UE as a called user,
wherein the receiving module is further configured to: before receiving the extended service request message sent by the UE, receive a first paging message sent by a MSC server for the UE; and
the sending module(₁₃) is further configured to: send a second paging message to the UE according to the first paging message received by the receiving module(n),
wherein the determining module is specifically configured to:
determine whether the first paging message sent by the MSC server for the UE is received; and
in situation that the first paging message sent by the MSC server for the UE is received, determine that the UE is a called user.

4. The MME according to claim 3, wherein the called identifier is comprised in a session transfer number for SRVCC STN-SR in the handover request message.

## Patentansprüche

1. Mobilitätsverwaltungsentität (Mobility Management Entity, MME), umfassend:
ein Empfangsmodul (81), das dazu konfiguriert ist, eine durch eine Benutzerausrüstung (User Equipment, UE) gesendete erweiterte Dienstanforderungsnachricht zu empfangen;
ein Bestimmungsmodul (82), das dazu konfiguriert ist, zu bestimmen, dass die UE ein rufender Benutzer ist; und
ein Sendemodul (83), das zu Folgendem konfiguriert ist: nachdem das Bestimmungsmodul (82) bestimmt, dass die UE ein rufender Benutzer ist, Senden, zu einem Mobilfunkvermittlungsstellen(Mobile Switching Center, MSC)-Server, einer Übergabeanforderungsnachricht, die anfordert, die UE von einer paketvermittelten (packet switched, PS) Domäne zu einer leitungsvermittelten (circuit switched, CS) Domäne zu übergeben, wobei die Übergabeanforderungsnachricht einen rufenden Identifikator, der die UE als einen rufenden Benutzer identifiziert, umfasst, wobei das Bestimmungsmodul insbesondere zu Folgendem konfiguriert ist:
Bestimmen, ob eine durch einen MSC-Server für die UE gesendete Paging-Nachricht empfangen wird; und
in der Situation, dass keine durch den MSC-Server für die UE gesendete Paging-Nachricht empfangen wird, Bestimmen, dass die UE ein rufender Benutzer ist.

2. MME nach Anspruch 1, wobei der rufende Identifikator in einer Sitzungsübertragungsnummer für SRVCC STN-SR in der Übergabeanforderungsnachricht enthalten ist.

3. Mobilitätsverwaltungsentität (Mobility Management Entity, MME), umfassend:
ein Empfangsmodul (11), das dazu konfiguriert ist, eine durch eine Benutzerausrüstung (User Equipment, UE) gesendete erweiterte Dienstanforderungsnachricht zu empfangen;
ein Bestimmungsmodul (12), das dazu konfiguriert ist, zu bestimmen, dass die UE ein angerufener Benutzer ist; und
ein Sendemodul (13), das zu Folgendem konfiguriert ist: nachdem das Bestimmungsmodul (12) bestimmt, dass die UE ein angerufener Benutzer ist, Senden, zu einem Mobilfunkvermittlungsstellen(Mobile Switching Center, MSC)-Server, einer Übergabeanforderungsnachricht, die anfordert, die UE von einer paketvermittelten (packet switched, PS) Domäne zu einer leitungsvermittelten (circuit switched, CS) Domäne zu übergeben, wobei die Übergabeanforderungsnachricht einen angerufenen Identifikator, der die UE als einen angerufenen Benutzer identifiziert, umfasst,
wobei das Empfangsmodul ferner zu Folgendem konfiguriert ist: vor dem Empfangen der durch die UE gesendeten erweiterten Dienstanforderungsnachricht, Empfangen einer ersten durch einen MSC-Server gesendeten Paging-Nachricht für die UE; und
das Sendemodul(13) ferner zu Folgendem konfiguriert ist: Senden einer zweiten Paging-Nachricht zu der UE gemäß der ersten durch das Empfangsmodul (11) empfangenen Paging-Nachricht,
wobei das Bestimmungsmodul insbesondere zu Folgendem konfiguriert ist:
Bestimmen, ob die erste durch den MSC-Server gesendete Paging-Nachricht für die UE empfangen wird; und
in der Situation, dass die erste durch den MSC-Server gesendete Paging-Nachricht für die UE empfangen wird, Bestimmen, dass die UE ein angerufener Benutzer ist.

4. MME nach Anspruch 3, wobei der angerufene Identifikator in einer Sitzungsübertragungsnummer für SRVCC STN-SR in der Übergabeanforderungsnachricht enthalten ist.

## Revendications

1. Entité de gestion de mobilité, MME, comprenant :
un module de réception (81), configuré pour recevoir un message de demande de service étendu envoyé par un équipement d'utilisateur, UE ;
un module de détermination (82), configuré pour déterminer que l'UE est un utilisateur appelant ; et
un module d'envoi (83), configuré pour : après que le module de détermination (82) a déterminé que l'UE est un utilisateur appelant, envoyer, à un serveur d'un centre de commutation mobile, MSC, un message de demande de transfert cellulaire qui demande le transfert de l'UE d'un domaine à commutation de paquets, PS, vers un domaine à commutation de circuits, CS, le message de demande de transfert cellulaire contenant un identifiant d'appelant qui identifie l'UE comme utilisateur appelant, le module de détermination étant spécifiquement configuré pour :
déterminer si un message de radiomessagerie envoyé par un serveur MSC à destination de l'UE a été reçu ; et
dans le cas où aucun message de radiomessagerie envoyé par un serveur MSC à destination de l'UE n'a été reçu, déterminer que l'UE est un utilisateur appelant.

2. MME selon la revendication 1, dans laquelle l'identifiant d'appelant est contenu dans un numéro de transfert de session pour SRVCC STN-SR présent dans le message de demande de transfert cellulaire.

3. Entité de gestion de mobilité, MME, comprenant :
un module de réception (11), configuré pour recevoir un message de demande de service étendu envoyé par un équipement d'utilisateur, UE ;
un module de détermination (12), configuré pour déterminer que l'UE est un utilisateur appelé ; et
un module d'envoi (13), configuré pour : après que le module de détermination (12) a déterminé que l'UE est un utilisateur appelé, envoyer, à un serveur d'un centre de commutation mobile, MSC, un message de demande de transfert cellulaire qui demande le transfert de l'UE d'un domaine à commutation de paquets, PS, vers un domaine à commutation de circuits, CS, le message de demande de transfert cellulaire contenant un identifiant d'appelé qui identifie l'UE comme utilisateur appelé,
le module de réception étant également configuré pour : avant la réception du message de demande de service étendu envoyé par l'UE, recevoir un premier message de radiomessagerie envoyé par un serveur MSC à destination de l'UE ; et
le module d'envoi (13) étant également configuré pour : envoyer un deuxième message de radiomessagerie à l'UE en fonction du premier message de radiomessagerie reçu par le module de réception (11),
le module de détermination étant spécifiquement configuré pour :
déterminer si le premier message de radiomessagerie envoyé par le serveur MSC à destination de l'UE a été reçu ; et
dans le cas où le premier message de radiomessagerie envoyé par le serveur MSC à destination de l'UE a été reçu, déterminer que l'UE est un utilisateur appelé.

4. MME selon la revendication 3, dans laquelle l'identifiant d'appelé est contenu dans un numéro de transfert de session pour SRVCC STN-SR présent dans le message de demande de transfert cellulaire.
